# EUROPÄISCHE PATENTANMELDUNG

(11) **EP 0 553 637 A1**
(43) Veröffentlichungstag der Anmeldung: **04.08.1993**
(21) Anmeldenummer: 93100362.8
(22) Anmeldetag: 13.01.1993
(51) Int. Cl.: B01D 39/20

(54) **Material für Filter, insbesondere Öl-, Benzin- oder Dieselfilter von Kraftfahrzeugen**

(30) Priorität: 22.01.1992 DE 4201559
(71) Anmelder: Schwäbische Hüttenwerke GmbH, D-73414 Aalen (DE)
(72) Erfinder: Härle, Hans A., Dipl.-Ing., W-7085 Bopfingen (DE)
(74) Vertreter: Lorenz, Werner, Dipl.-Ing.

(57) **Zusammenfassung**

Als Material für Filter, insbesondere für Öl-, Benzin- oder Dieselfilter von Kraftfahrzeugen wird ein Sintermetallvlies mit einem Gewebe als tragender Matrix (1) verwendet. Auf die Matrix sind wenigstens auf einer Seite metallische Fasern (2) Metallspäne oder Metallpulver oder eine Mischung daraus aufgesintert.

## Beschreibung

Die vorliegende Erfindung betrifft ein Material für Filter, insbesondere Öl-, Benzin- oder Dieselfilter von Kraftfahrzeugen, ein Verfahren zu dessen Herstellung und danach hergestellte Filter.

Insbesondere Ölfilter, die im Kraftfahrzeugbereich verwendet werden, werden nach einem Ölwechsel mit all ihrem aufgesogenen Öl und ihrem Filtrat ausgetauscht. Das Filtrat besteht dabei aus metallischen Abrieben und Additiven, die damit einfach weggeworfen werden, wodurch eine entsprechende Umweltbelastung erfolgt, sofern nicht für eine aufwendige und damit teuere Entsorgung gesorgt wird. Eine wiederholte Verwendung derartiger Ölfilter ist aus mehreren Gründen, insbesondere aus Gründen der fehlenden Haltbarkeit und der fehlenden Reinigungsmöglichkeit des Filters, nicht vorgesehen.

Im allgemeinen bestehen derartige Filter nach dem Stand der Technik aus einem Papiervlies, das wegen seiner geringen Festigkeit und Löslichkeit in Öl nur eine begrenzte Lebensdauer besitzt. Das Papiervlies ist dabei in einer Filterpatrone angeordnet und wird von dem Öl durchströmt.

Der vorliegenden Erfindung liegt daher die Aufgabe zugrunde, ein Material für einen Filter, insbesondere einen Ölfilter von Kraftfahrzeugen zu schaffen, der eine höhere Festigkeit besitzt und der dadurch im Bedarfsfalle wiederverwendbar ist.

Erfindungsgemäß wird diese Aufgabe gelöst durch ein Material, das aus einem Sintermetallvlies besteht mit einem Gewebe als tragende Matrix, auf das wenigstens auf einer Seite metallische Fasern aufgesintert sind.

Zusätzlich oder anstelle der metallischen Fasern, insbesondere von Kurzfasern, können auch Metallspäne oder Metallpulver auf die tragende Matrix aufgesintert sein. Ebenso sind auch Mischungen aus den genannten Stoffen möglich.

In vorteilhafter Weise wird man metallische Kurzfasern, Metallspäne oder Metallpulver oder eine Mischung daraus auf beiden Seiten der Matrix aufsintern.

Durch diese Ausgestaltung erhält man eine noch bessere Stabilität und einen besseren Wirkungsgrad.

Eines der wesentlichen Vorteile dieses Filtermateriales liegt darin, daß es eine weit höhere Festigkeit besitzt, als bekannte Papiervliese. Aus diesem Grunde besitzt es eine deutlich größere Lebensdauer und kann bei Bedarf mehrfach verwendet werden. Insbesondere, aufgrund der größeren Festigkeit, kommt es nicht zu einer Zerstörung oder Beschädigung des Filters, wenn dieses für eine mehrfache Verwendung z.B. nach einem Ölwechsel, gereinigt wird. Zu diesem Zweck kann der Filter rückgespült werden. Dies kann z.B. im ausgebauten Zustand oder aber gegebenenfalls auch im eingebauten Zustand erfolgen, wenn entsprechende Rückspüleinrichtungen vorgesehen sind.

Ein weiterer Vorteil des erfindungsgemäßen Materiales liegt darin, daß es eine sehr hohe Porosität mit einem hohen Abscheidegrad von Verunreinigungen besitzt.

Trotz der größeren Festigkeit des Sintermetallvlieses ist dieses jedoch genügend elastisch bzw. biegsam, so daß es in jede gewünschte Filterform gebracht werden kann.

Als Material für die tragende Matrix kann ein Gewirr von endlosen isotropen Metallfasern verwendet werden. Hierfür ist auch eine handelsübliche Ware geeignet, die z.B. aus einem Gewebe mit Längs- und Querfäden besteht, die in einer bekannten Leinenbindung verwebt sind.

Als geeignete Dicken für die tragende Matrix haben sich Werte zwischen 0,05 bis 0,2 mm, vorzugsweise 0,1 mm herausgestellt. Die Gesamtstärke des Materiales, zusammen mit den aufgesinterten Teilen liegt vorzugsweise zwischen 0,2 bis 1 mm.

Als Material für die Matrix und die aufgesinterten Teile können rostfreier oder ferritischer Stahl verwendet werden.

Im Bedarfsfalle sind jedoch auch andere Materialien geeignet. Bei Verwendung als Benzinfilter z.B., wobei eine Funkenbildung vermieden werden soll, ist auch Kupfer, Aluminium oder ein Buntmetall geeignet. Aluminium oder Buntmetall haben als zusätzlichen Vorteil ein geringeres Gewicht.

Das erfindungsgemäße Material kann auf beliebige Weise hergestellt werden. In einfacher Weise wird man als Matrix ein Bandmaterial verwenden, das man auf einfache Weise in die gewünschte Filterform bringt, was im allgemeinen eine Zylinderform sein wird. Die Stoßkanten können bei dem erfindungsgemäßen Material in einfacher Weise und damit sehr billig, vorzugsweise verlötet oder verschweißt werden. Selbstverständlich kann jedoch eine Verbindung auch durch Kleben erfolgen.

Die Herstellung des Sintermetallvlieses aus der tragenden Matrix und den aufgesinterten Teilen kann in einfacher Weise dadurch erfolgen, daß man die Matrix mit einem Bindemittel einstreicht und anschließend die Fasern und/oder Metallspäne oder Metallpulver oder eine Mischung daraus aufstreut. Aufgrund des Bindemittels haften diese Teile dann auf der Matrix, wonach in bekannter Weise die Versinterung erfolgt, welche in Abhängigkeit von den verwendeten Metallen bei entsprechenden Temperaturen erfolgt.

Nachfolgend ist ein Ausführungsbeispiel der Erfindung prinzipmäßig beschrieben.

Es zeigt:
- Fig. 1: einen Schnitt durch das erfindungsgemäße Material;
- Fig. 2: eine Ansicht eines Filters aus dem erfindungsgemäßen Material.

Als Ausgangsmaterial für einen Filter wird eine tragende Matrix 1 verwendet, die aus einem Gewebe mit endlosen isotropen Metallfasern besteht.

Auf beide Seiten der Matrix 1 werden metallische Kurzfasern mit Längen zwischen 1 mm und 5 mm aufgebracht, die zusammen mit der Matrix versintert werden.

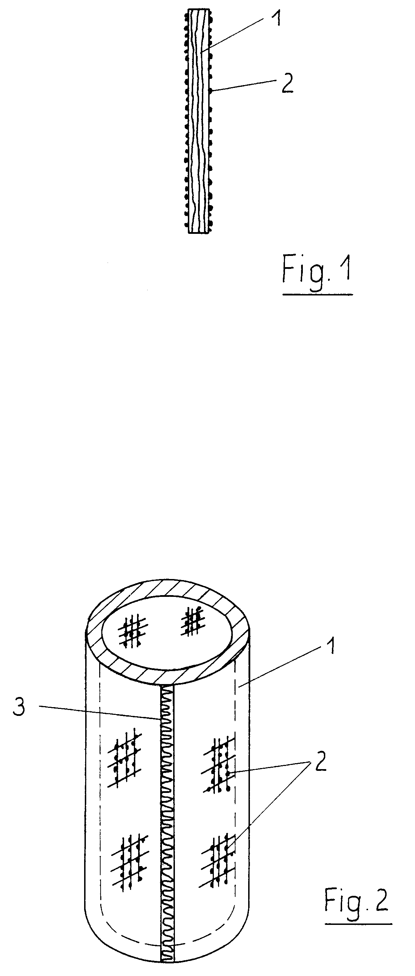

Wie aus der Fig. 2 ersichtlich, ist das Sintermetallvlies aus einem Band entsprechender Länge gebildet, das in eine Zylinderform gewickelt ist. Die beiden Bandenden werden durch eine Löt- oder Schweißnaht 3 miteinander verbunden.

Da das Sintermetallvlies bezüglich seiner Formgebung sehr variabel ist, kann es in einer sehr vorteilhaften Weise als reines Austauschteil für die bekannten Papiervliesfilter verwendet werden. Dies bedeutet, daß z.B. Ölfilter in Kraftfahrzeugen auf einfache Weise und problemlos mit dem erfindungsgemäßen Sintermetallvlies nachgerüstet bzw. umgerüstet werden können. Das erfindungsgemäße Sintermetallvlies kann dabei in die herkömmlichen Ölfilterbehälter bzw. Ölfilterpatronen eingesetzt werden. Aufgrund seiner großen Stabilität kann es gegebenenfalls während der gesamten Benutzungsdauer eines Kraftfahrzeuges in diesem verbleiben und muß lediglich in bestimmten Intervallen ausgebaut und gereinigt werden bzw. einer Rückspülung unterzogen werden.

## Patentansprüche

1. Material für Filter, insbesondere für Öl-, Benzin-, oder Dieselfilter von Kraftfahrzeugen, aus einem Sintermetallvlies, mit einem Gewebe als tragende Matrix (1), auf das wenigstens auf einer Seite metallische Fasern (2) aufgesintert sind.

2. Material nach Anspruch 1,
**dadurch gekennzeichnet,** daß die Fasern Kurzfasern (2) sind.

3. Material nach Anspruch 1 oder 2,
**dadurch gekennzeichnet,** daß Metallspäne oder Metallpulver aufgesintert sind.

4. Material nach Anspruch 1, 2 oder 3,
**dadurch gekennzeichnet,** daß auf beiden Seiten der Matrix (1) metallische Kurzfasern, Metallspäne oder Metallpulver (2) oder eine Mischung daraus aufgesintert sind.

5. Material nach Anspruch 1, 2, 3 oder 4,
**dadurch gekennzeichnet,** daß die metallischen Kurzfasern (2) Längen zwischen 1 mm und 5 mm, vorzugsweise 2 mm besitzen.

6. Material nach einem der Ansprüche 1 bis 5,
**dadurch gekennzeichnet,** daß die Matrix (1) aus einem endlosen, isotropen Gewirr von Metallfasern gebildet ist.

7. Material nach einem der Ansprüche 1 bis 6,
**dadurch gekennzeichnet,** daß die Matrix (1) aus Längs- und Querfäden in Leinenbindung gebildet ist.

8. Material nach einem der Ansprüche 1 bis 7,
**dadurch gekennzeichnet,** daß die Dicke der Matrix (1) zwischen 0,05 und 0,2 mm, vorzugsweise 0,1 mm beträgt.

9. Material nach einem der Ansprüche 1 bis 8,
**dadurch gekennzeichnet,** daß dessen Gesamtdicke zwischen 0,2 und 1 mm beträgt.

10. Material nach einem der Ansprüche 1 bis 9,
**dadurch gekennzeichnet,** daß es aus rostfreiem oder ferritischem Material besteht.

11. Material nach einem der Ansprüche 1 bis 9,
**dadurch gekennzeichnet,** daß es aus Aluminium, Kupfer oder einem Buntmetall besteht.

12. Verfahren zum Herstellen eines Materiales für Filter, insbesondere für Öl-, Benzin- oder Dieselfilter von Kraftfahrzeugen,
**dadurch gekennzeichnet,** daß ein Gewebe als tragende Matrix (1) verwendet wird, in das Fasern (2) und/oder Metallspäne oder Metallpulver eingestreut wird, wonach das Material gesintert wird.

13. Verfahren nach Anspruch 12,
**dadurch gekennzeichnet,** daß als Matrix (1) ein Band verwendet wird, das in die gewünschte Filterform, insbesondere in eine zylindrische Form, gewickelt wird, wobei die Verbindungsnaht verschweißt, verlötet oder geklebt wird.

14. Filter, insbesondere Öl-, Benzin- oder Dieselfilter von Kraftfahrzeugen, der aus einem Sintermetallvlies mit einem Gewebe als tragender Matrix (1) gebildet ist, auf das wenigstens auf einer Seite metallische Fasern, Metallspäne oder Metallpulver (2) oder eine Mischung daraus aufgesintert sind.

15. Verwendung eines Sintermetallvlieses mit einem Gewebe als tragender Matrix (1), auf das wenigstens auf einer Seite metallische Fasern, Metallspäne oder Metallpulver (2) oder eine Mischung daraus aufgesintert sind, als mehrfach verwendbarer und reinigbarer Filter, insbesondere für Öl-, Benzin- oder Dieselfilter von Kraftfahrzeugen.
